# EUROPEAN PATENT SPECIFICATION

(11) **EP 2 936 597 B1**
(45) Date of publication and mention of the grant of the patent: **02.05.2018**
(21) Application number: 13865203.7
(22) Date of filing: 17.12.2013
(51) Int. Cl.: H01M 4/86, H01M 4/90, H01M 8/1253, H01M 8/124

(54) **POWDER MIXTURE FOR LAYER IN A SOLID OXIDE FUEL CELL**
PULVERGEMISCH FÜR SCHICHT IN EINER FESTOXIDBRENNSTOFFZELLE
MÉLANGE DE POUDRES POUR UNE COUCHE DANS UNE PILE À COMBUSTIBLE À OXYDE SOLIDE

(30) Priority: 18.12.2012 US 201261738858 P
(43) Date of publication of application: 28.10.2015
(73) Proprietor: Saint-Gobain Ceramics & Plastics Inc., Worcester, Massachusetts 01615-0138 (US)
(72) Inventor: MOHANRAM, Aravind, Northborough, Massachusetts 01532 (US); NARENDAR, Yeshwanth, Westford, Massachusetts 01886 (US); PATTERSON, Zachary R., Denver, CO 80212 (US); PIETRAS, John D., Sutton, Massachusetts 01590 (US)
(74) Representative: Zimmermann & Partner Patentanwälte mbB
(86) International application number: PCT/US2013/075865
(87) International publication number: WO 2014/100040

(56) References cited:
- WO-A1-2013/074656
- WO-A2-2006/135594
- KR-A- 20100 062 456
- US-A- 5 624 542
- US-A1- 2003 175 439
- US-A1- 2005 069 756
- US-A1- 2010 159 356
- US-A1- 2011 200 909
- BENJAMIN VÖLKER ET AL: "Impact of particle size ratio and volume fraction on effective material parameters and performance in solid oxide fuel cell electrodes", JOURNAL OF POWER SOURCES, ELSEVIER SA, CH, vol. 215, 9 May 2012 (2012-05-09), pages 199-215, XP028433041, ISSN: 0378-7753, DOI: 10.1016/J.JPOWSOUR.2012.05.014 [retrieved on 2012-05-16]

## Description

### FIELD OF THE DISCLOSURE

The following is directed to powder mixtures, layers formed from the powder mixtures, electrodes formed from the layers, solid oxide fuel cells (SOFCs) containing the electrodes, and methods of forming SOFCs.

### DESCRIPTION OF THE RELATED ART

A fuel cell is a device that generates electricity by a chemical reaction. Among various fuel cells, solid oxide fuel cells (SOFCs) use a hard, ceramic compound metal (e.g., cerium or zirconium) oxide as an electrolyte. In some instances, fuel cell assemblies have been designed as stacks, which can include a cathode, anode, and solid electrolyte between the cathode and the anode. Each stack can be considered a subassembly, which can be combined with other stacks to form a full SOFC article. In assembling the SOFC article, electrical interconnects can be disposed between the cathode of one stack and the anode of another stack.

Typically, in solid oxide fuel cells, an oxygen gas, such as O₂, is reduced to oxygen ions (O²⁻) at the cathode, and a fuel gas, such as H₂ gas, is oxidized with the oxygen ions to form water at the anode. The main function of the cathode, in particular, is to provide reaction sites for the electrochemical reduction of oxygen gas. The cathode material must be stable in the oxidizing environment and have sufficient electronic and ionic conductivity, catalytic activity for the oxygen gas reduction under operating conditions, gas diffusion, and chemical and physical compatibility with surrounding components.

In order to facilitate the cathode kinetics, it is typically desirable to include a large number of triple point boundary (TPB) sites for the reduction reaction. The TPB sites are typically concentrated in the cathode functional layer (CFL) of the cathode, a typically thin layer between and in direct physical contact with the cathode bulk layer and the electrolyte. A porous cathode structure helps ensure that the gaseous reactants will diffuse into the TPB sites.

However, SOFCs can vary in quantity of TPB sites. In particular, materials employed to form the various components of an SOFC, including ceramics of differing compositions employed to form the cathode functional layer, exhibit distinct material, chemical, and electrical properties that, if not selected properly, can result in low quantity of TPB sites and poor performance (power density) of the SOFC article. KR 10-2010-0062456 is concerned with a dense complex oxide film containing conductive oxides LaₓSr₍₁₋ₓ₎MnO₃ (LSM, here, 0≤x≤1) and non-conductive oxides YₓZr₍₁₋ₓ₎O_{(3-0.5x)} (YSZ, here 0≤x≤20) and a method for manufacturing the same. Said method comprises a step of mixing conductive LSM powder and non-conductive YSZ powder with a ball mill to obtain a complex oxide powder; and a step of depositing the complex oxide powder on a metal substrate to form thin film.

The industry continues to demand improved SOFC articles.

### BRIEF DESCRIPTION OF THE DRAWINGS

The present disclosure may be better understood, and its numerous features and advantages made apparent to those skilled in the art by referencing the accompanying drawings.
FIG. 1 illustrates a SOFC unit cell subassembly in accordance with an embodiment described herein.
FIG. 2 illustrates a SOFC unit cell subassembly in accordance with an embodiment described herein.
FIG. 3 illustrates a graph for determining the power density and voltage drop which shows three current-voltage (IV) curves recorded using a potentiostat/galvanostat according to an example of an embodiment described herein.

Skilled artisans appreciate that elements in the figures are illustrated for simplicity and clarity and have not necessarily been drawn to scale. For example, the dimensions of some of the elements in the figures can be exaggerated relative to other elements to help improve understanding of embodiments of the invention. The use of the same reference symbols in different drawings indicates similar or identical items.

### DETAILED DESCRIPTION

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes, " "including, " "has, " "having," or any other variation thereof, are intended to cover a non-exclusive inclusion. For example, a process, method, article, or apparatus that comprises a list of features is not necessarily limited only to those features but can include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

As used herein, the phrase "average particle diameter" refers to the median particle diameter, also commonly referred to in the art as d₅₀.

Unless otherwise defined, all technical and scientific terms used herein have the same meaning as commonly understood by one of ordinary skill in the art to which this invention belongs. The materials, methods, and examples are illustrative only and not intended to be limiting.

According to embodiments described herein, a raw powder material configured to make a layer of an electrode for an SOFC according to claim 1 can contain an ionic conductor powder material and an electronic conductor powder material. By controlling, at least, a ratio of an average particle diameter of the ionic conductor powder material (d₅₀₍ᵢ₎) to an average particle diameter of the electronic conductor powder material (d₅₀₍ₑ₎) as described herein, a layer, for example, a cathode functional layer made from the raw powder can exhibit increased porosity, increased TPB sites, and increased power density in a SOFC.

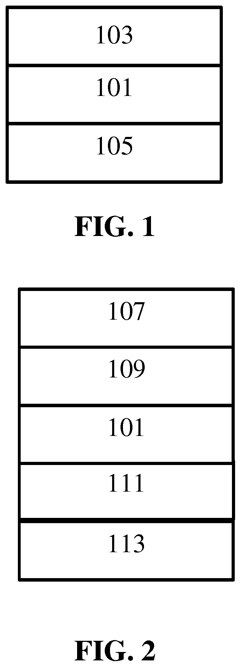

Referring now to FIG. 1, a SOFC unit cell can include an anode layer 103, a cathode layer 105, and an electrolyte layer 101 between the anode layer 103 and the cathode layer 105. As further illustrated in FIG. 2, the anode layer 103 can include an anode functional layer 109 adjacent the electrolyte and an anode bulk layer 107 overlaying the anode functional layer 109, and the cathode layer 105 can include a cathode functional layer 111 adjacent the electrolyte and a cathode bulk layer 113.

Before assembling the component layers in the unit cell 100 as illustrated herein, each of the layers can be formed individually. That is, the layers can be formed separately (e.g., as green layers) and assembled together into the unit cell 100. Alternatively, the layers may be formed (e.g., in green state) in succession on each other. In a particular embodiment, the green SOFC unit cell 100 can be sintered in a single sintering process (e.g., a single, free-sintering process), or a pressure assisted sintering process (e.g. hot pressing (HP), sinter forging, etc.), and may also be sintered in a co-sintering process (sintering two or more component layers together at the same time) to form a sintered SOFC unit cell.

Reference herein to "green" articles is reference to materials that have not undergone sintering to affect densification or grain growth. A green article is an unfinished article that may be dried and have low water content, but is unfired. A green article can have suitable strength to support itself and other green layers formed thereon.

The layers described according to the embodiments herein, which is described in more detail below can be formed through techniques including, but not limited to, hot pressing, casting, deposition, printing, extruding, lamination, die-pressing, gel casting, spray coating, screen printing, roll compaction, injection molding, and a combination thereof. In one particular instance, one or more of the layers can be formed via hot pressing. The green layers are first formed typically through tape casting and later stacked and co-sintered or hot-pressed.

The anode layer 103 can be disposed adjacent the electrolyte layer 101 and opposite the cathode layer 105. In particular, the anode layer 103 can be in direct contact with the electrolyte layer 101. Additionally, the anode layer 103 can be in direct contact with an interconnect layer (not shown). In certain instances, there may or may not be any intervening buffer layers between the anode layer 103 and the electrolyte layer 101, or between the anode layer 103 and the interconnect layer.

In particular instances, the anode layer 103 can be a cermet material, that is, a combination of a ceramic and metallic material. Some suitable metals can include transition metal species, including for example, nickel or copper. The anode layer 103 can include an ionic conductor, including for example, a ceramic material, and particularly, an oxide material. For example, the anode layer 103 may be formed with nickel and a zirconia-based material, including for example, yttria-stabilized zirconia. Alternatively, the anode layer 103 can include a ceria-based material, including for example, gadolinium oxide-stabilized ceria. The nickel can be produced through the reduction of nickel oxide included in the anode green material. Alternatively, it will be appreciated that certain other types of oxide materials may be used in the anode layer 103, such as titanates, manganites, chromites, a combination thereof, and the like. It will be appreciated that such oxides may also be perovskite materials.

The anode layer 103 can be a thin and substantially planar layer of material. The anode layer 103 can have an average thickness that is greater than the average thickness of the electrolyte layer 101 or the interconnect layer. For example, the anode layer 103 can have an average thickness of at least about 50 microns, such as at least about 100 microns, at least about 300 microns, at least about 500 microns, at least about 700 microns, at least about 1mm, or even at least about 1.5 mm. Still, the anode layer 103 can have an average thickness of not greater than about 5 mm, such as not greater than about 4 mm, not greater than about 3 mm, or even not greater than about 2.5 mm. It will be appreciated that the anode layer 103 can have an average thickness within a range between any of the minimum and maximum values noted above.

The anode layer 103 can be formed from a powder electrode material having a particular particle size that facilitates formation of a unit cell according to the embodiments herein. For example, the powder electrode material can have an average particle size of less than about 100 microns, such as less than about 50 microns, less than about 20 microns, less than about 10 microns, less than about 5 microns, or even less than about 1 micron. Still, in particular instances, the average particle size of the powder electrode material can be at least about 0.01 microns, at least about 0.05 microns, at least about 0.08 microns, at least about 0.1 microns, at least about 0.2 microns, or even at least about 0.4 microns. It will be appreciated that the powder electrode material can have an average particle size within a range including any of the minimum and maximum values noted above.

The anode layer 103 can be a porous layer. The porosity may be in the form of channels, which can be utilized to deliver fuel to the SOFC article. The channels may be arranged in a particular manner, such as in a regular and repeating pattern throughout the volume of the anode layer 103. Any suitable techniques may be used to form the porosity and/or channels, including for example, incorporating shaped fugitives, embossing, cutting channels in tapes and then laminating the tapes to define channels, using extrusion through preforms, using patterned rolls in roll compaction.

There exists a variety of possible materials for fugitives, such as, for example, graphite or fibers that can be used to form the channels or passageways within the cathode and anode layers. The fugitives can be selected from materials that will vaporize or out-gas during heat treatment to form the SOFC article. In one embodiment, the fugitives can be an organic material. Certain suitable examples of fugitives include natural fibers, cotton, bast fibers, cordage fibers, or animal fibers, such as wool. Alternatively, the fugitives can be manufactured material such as, regenerated cellulose, cellulose diacetate, cellulose triacetate, starch, polyamide, polyester, polyacrylic, polyvinyl, polyolefin resins, carbon or graphite fibers, or liquid crystal polymers. The fugitives may also be a binder material, such as synthetic rubber, thermoplastics, or polyvinyl and plasticizer material such as glycol and phthalate groups. In another embodiment, the material can be pasta, such as spaghetti.

Referring again to FIG. 2, the anode layer 103 can include an anode bulk layer 107 and an anode functional layer 109. The anode bulk layer 107 can be directly in contact with the anode functional layer 109, and the anode functional layer 109 may also be in direct contact with the electrolyte layer 101. In other embodiments, the anode bulk layer 107 can be directly bonded to the anode functional layer 109 and an anode bonding layer (not shown). The anode bulk layer 107 can include the same materials as the anode layer 103 described herein.

The green material of the anode bulk layer 107 can be formed of a generally coarser material than the anode functional layer 109. In particular instances, the anode bulk layer 107 can be formed of non-agglomerated particles which can contain a first particle and a second particle. The first particle can have an average particle size that is greater than the second particle size, such as at least 10 times greater, at least 30 times greater, or at least 50 times greater. In certain embodiments, the first particle can have an average particle size with a range of between about 10 microns to 100 microns, between about 25 microns to 75 microns, or even between about 40 to 60 microns. The second particle can have an average particle size within a range of between about 0.01 microns to 20 microns, between about 0.05 microns to 10 microns, or even between about 0.1 microns to 5 microns.

The anode bulk layer 107 can be a thin and substantially planar layer of material, having an average thickness that is greater than the average thickness of the anode functional layer 109. In particular, the anode bulk layer 107 can have an average thickness not greater than about 5 mm, such as not greater than about 4 mm, not greater than about 3 mm, or not greater than about 2.5mm. Still, the anode bulk layer 107 can have an average thickness of at least about 50 microns, such as at least about 100 microns, at least about 500 microns, at least about 1 mm, or at least about 1.5 mm. It will be appreciated that the anode bulk layer 107 can have an average thickness within a range between any of the minimum and maximum values noted above.

The anode functional layer 109 can be in direct contact with the electrolyte layer 101. More particularly, the anode functional layer 109 can be directly bonded to the electrolyte layer 101. The anode functional layer 109 can include the same materials as the anode layer 103 described herein. The anode functional layer 109 can facilitate suitable electrical and electrochemical characteristics of the finished SOFC article, and improve electrical and mechanical connection between the anode and the electrolyte.

In particular instances, the green material of the anode functional layer 109 can be formed of a powder which can have an average particle size not greater than about 100 microns, such as not greater than about 75 microns, and in certain embodiments, not greater than about 45 microns. Additionally, the powder can be a mixture of a first particle and a second particle, wherein the first particle may have a notably finer particle size than the second particle. For example, in certain embodiments, the first particle can have an average particle size that is greater than the second particle size, such as at least 2 times greater, at least 3 times greater, or at least 4 times greater. In certain embodiments, the first particle can have an average particle size with a range of between about 1 microns to 50 microns, between about 1.5 microns to 25 microns, or even between about 2 to 10 microns. The second particle can have an average particle size within a range of between about 0.01 microns to 20 microns, between about 0.05 microns to 10 microns, or even between about 0.1 microns to 5 microns. Such sizes can facilitate formation of suitable pore sizes and grain sizes within the anode functional layer 109.

The anode functional layer 109 can be a thin and substantially planar layer of material, having an average thickness of not greater than about 1 mm, such as not greater than about 700 microns, not greater than about 500 microns, not greater than about 200 microns, not greater than about 150 microns, such as not greater than about 100 microns, or even not greater than about 50 microns. Still, the anode functional layer 109 can have an average thickness of at least about 0.5 microns, such as at least about 1 micron, at least about 5 microns, at least about 10 microns, at least about 15 microns, or even at least about 20 microns. It will be appreciated that the anode functional layer 109 can have an average thickness within a range between any of the minimum and maximum values noted above.

Referring again to FIG. 1, a SOFC unit cell can include a cathode layer 105. In one embodiment, the cathode layer 105 can be made of an inorganic material. Certain suitable inorganic materials can include oxides. The cathode layer 105 can include a rare earth element. In at least one embodiment, the cathode layer 105 can include elements such as lanthanum (La), manganese (Mn), strontium (Sr), and a combination thereof.

In one particular embodiment, materials for the cathode can include lanthanum manganite materials. The cathode can be made of a doped lanthanum manganite material, giving the cathode composition a perovskite type crystal structure. Accordingly, the doped lanthanum manganite material may have a dopant material which can be selected from alkaline earth metals, lead, or generally divalent cations having an atomic ratio of between about 0.4 and 0.9 Angstroms. According to one embodiment, the dopant material is selected from the group of elements consisting of Mg, Ba, Sr, Ca, Co, Ga, Pb, and Zr. According to a particular embodiment, the dopant is Sr, and the cathode material is a lanthanum strontium manganite material, known generally as LSM.

The cathode layer 105 can have an average thickness that is greater than the average thickness of the electrolyte layer 101 or the interconnect layer. For example, the cathode layer 105 can have an average thickness of at least about 50 microns, such as at least about 100 microns, at least about 300 microns, at least about 500 microns, at least about 1 mm, or even at least about 1.5 mm. Still, the cathode layer 105 can have an average thickness of not greater than about 5 mm, such as not greater than about 4 mm, not greater than about 3 mm, or even not greater than about 2 mm. In another example, the cathode layer 105 can have an average thickness that is not greater than about 2 mm, such as not greater than about 1.9 mm, not greater than about 1.8 mm, not greater than about 1.7 mm, or not greater than about 1.6 mm. It will be appreciated that the cathode layer 105 can have an average thickness within a range between any of the minimum and maximum values noted above.

Referring again to FIG. 2, the cathode layer 105 includes a cathode bulk layer 113 and a cathode functional layer 111. The cathode bulk layer 113 may be made of any of the cathode materials described herein, and may have any of the characteristics of the cathode layer 105 described herein.

The cathode bulk layer 113 can have an average thickness that is greater than the average thickness of the electrolyte layer 101 or the cathode functional layer 111. For example, the cathode layer 105 can have an average thickness of at least about 50 microns, such as at least about 100 microns, at least about 300 microns, at least about 500 microns, at least about 700 microns, at least about 1 mm, or even at least about 1.5 mm. Still, the cathode layer 105 can have an average thickness of not greater than about 5 mm, such as not greater than about 4 mm, not greater than about 3 mm, or even not greater than about 2 mm. In another example, the cathode layer 105 can have an average thickness that is not greater than about 2 mm, such as not greater than about 1.9 mm, not greater than about 1.8 mm, not greater than about 1.7 mm, or not greater than about 1.6 mm. It will be appreciated that the cathode layer 105 can have an average thickness within a range between any of the minimum and maximum values noted above.

According to one embodiment, the cathode functional layer 111 includes a combination of electronic conducting material and an ionic conducting material.

In certain embodiments, the ionic conductor powder material can include an inorganic material, such as a ceramic material. For example, the ionic conductor powder material can include an oxide material. Some suitable oxides can include zirconia (ZrO₂), and more particularly, zirconia-based materials that can incorporate other elements such as stabilizers or dopants, which can include elements such as yttria (Y), ytterbium (Yb), cerium (Ce), scandium (Sc), samarium (Sm), gadolinium (Gd), lanthanum (La), praseodymium (Pr), neodymium (Nd), and a combination thereof. In particular embodiments, the ionic conductor materials can include Y₂O₃-doped ZrO₂, generally referred to YSZ. In particular embodiments, the ionic conductor powder material can be made of ZrO₂ doped with 8 mol % Y₂O₃ (i.e., 8 mol % Y₂O₃-doped ZrO₂) or 10 mol% Y₂O₃ (i.e., 10 mol % Y₂O₃-doped ZrO₂). Other exemplary ionic conductor powder materials can include stabilized yttrium-zirconate (e.g., Y₂Zr₂O₇). In more particular embodiments, the ionic conductor powder material can consist essentially of YSZ.

In certain embodiments, the electronic conductor powder material can comprise an inorganic material. Certain suitable inorganic materials can include oxides. The electronic conductor powder material can include a rare earth element. In at least one embodiment, the electronic conductor powder material can include elements such as lanthanum (La), manganese (Mn), strontium (Sr), and a combination thereof. In one particular embodiment, electronic conductor powder materials can include lanthanum manganite materials. The electronic conductor powder material can include a doped lanthanum manganite material. In particular embodiments, The dopant material can be selected from alkaline earth metals, lead, or generally divalent cations having an atomic ratio of between about 0.4 and 0.9 Angstroms. As such, according to one embodiment, the dopant material is selected from the group of elements consisting of Mg, Ba, Sr, Ca, Co, Ga, Pb, and Zr. According to a particular embodiment, the dopant is Sr, and the cathode material is a lanthanum strontium manganite material, known generally as LSM. In particular embodiments, the electronic conductor powder material can consist essentially of LSM. In even more particular embodiments, the cathode functional layer 111 can consist essentially of YSZ and LSM.

In certain embodiments, characteristics such as a particular ratio of average diameters of the ionic conductor powder material to the electronic conductor powder material has surprisingly been found to exhibit an increased power density as a cathode functional layer 111 in an SOFC in comparison to a conventional 1:1 ratio. For example, in certain embodiments, a ratio (d₅₀₍ᵢ₎:d₅₀₍ₑ₎) of an average particle diameter of the ionic conductor powder material (d₅₀₍ᵢ₎) to an average particle diameter of the electronic conductor powder material (d₅₀₍ₑ₎) can be greater than about 0.7:1, such as greater than about 0.8:1, greater than about 0.9:1, greater than about 1:1, greater than about 1.1:1, greater than about 1.5:1, greater than about 1.8:1, greater than about 1.9:1, or even greater than about 2:1. In certain further embodiments the ratio can be less than about 10: 1, less than about 5:1, less than about 4:1, less than about 3:1, less than about 2.5:1, less than about 2.1:1, less than about 2.0:1, or even less than about 0.9:1. Also, the ratio can be within a range between and including any of the ratios described herein. For example, in a particular embodiment, a ratio (d₅₀₍ᵢ₎:d₅₀₍ₑ₎) of an average particle diameter of the ionic conductor powder material (d₅₀₍ᵢ₎) to an average particle diameter of the electronic conductor powder material (d₅₀₍ₑ₎) can be in a range of about 1.9:1 to about 2.1:1. In another particular embodiment, a ratio (d₅₀₍ᵢ₎:d₅₀₍ₑ₎) of an average particle diameter of the ionic conductor powder material (d₅₀₍ᵢ₎) to an average particle diameter of the electronic conductor powder material (d₅₀₍ₑ₎) can be in a range of about 0.8:1 and about 1.1:1.

In an embodiment, an average particle diameter of at least one of the electronic conductor powder material d₅₀₍ₑ₎ or the ionic conductor powder material (d₅₀₍ᵢ₎) can be coarse. In certain embodiments, the average particle diameter of the ionic conductor powder material (d₅₀₍ᵢ₎) can be coarse. The average particle diameter of the ionic conductor powder material d₅₀₍ᵢ₎ is no less than 1.5 microns, no less than about 1.8 microns, greater than about 2 microns, no less than about 2.2 microns, even no less than about 2.5 microns, or even no less than about 2.7. The average particle diameter of the ionic conductor powder material d₅₀₍ᵢ₎ is no greater than about 10 microns, no greater than about 5 microns, no greater than about 4.5 microns, no greater than about 4 microns, no greater than about 3.5 microns, no greater than about 3.1 microns, no greater than about 3.0 microns, or even no greater than about 2.9 microns. In a particular embodiment, the average particle diameter of the ionic conductor powder material d₅₀₍ᵢ₎ can be in a range of 2.6 microns and 3.0 microns. In another particular embodiment, the average particle diameter of the ionic conductor powder material d₅₀₍ᵢ₎ can be in a range of 2.7 microns and 2.9 microns.

In certain embodiments, the average particle diameter of the electronic conductor powder material d₅₀₍ₑ₎ can be coarse. For example, in particular embodiments, the average particle diameter of the electronic conductor powder material d₅₀₍ₑ₎ can be no less than about 0.1 microns, no less than about 0.5 microns, no less than about 1 microns, no less than about 1.5 microns, no less than about 2.0 microns, no less than about 2.5 microns, or even no less than about 3.0 microns. In other embodiments, the d₅₀ of the electronic conductor powder material can be no greater than about 50 microns, no greater than about 10 microns, no greater than about 5 µm, no greater than about 4.5 µm, no greater than about 4.0 µm, no greater than about 3.5 µm, no greater than about 3 µm, no greater than about 2.5 µm, no greater than about 2 microns, or even no greater than about 1.5 µm. Also, the average particle diameter of the electronic conductor powder material d₅₀₍ₑ₎ can be within a range between and including any of the average particle diameters of the electronic conductor powder material d₅₀₍ₑ₎ described herein. For example, in a particular instance, an average particle diameter of the electronic conductor powder material d₅₀₍ₑ₎ can be within a range of about 1.2 microns to about 1.6 microns. In another particular instance, an average particle diameter of the electronic conductor powder material d₅₀₍ₑ₎ can be within a range of about 2.8 microns to about 3.2 microns.

In certain embodiments, characteristics such as a combination of a relatively coarse average particle diameter of an ionic conductor powder material with a relatively coarse average particle diameter of an electronic conductor powder material has surprisingly been found to exhibit an increased power density as a cathode functional layer 111 in an SOFC in comparison to a cathode functional layer having one or both of an ionic conductor powder material and an electronic conductor powder material with a respectively finer average particle diameter. For example, in particular embodiments, a combination of a relatively coarse average particle diameter of an ionic conductor powder material with a relatively coarse average particle diameter of an electronic conductor powder material can comprise an average particle diameter of an ionic conductor powder material no less than about 2.5 microns, such as no less than about 2.6 microns, no less than about 2.7 microns, no less than about 2.8 microns, no less than about 2.9 microns, or even no less than about 3.0 microns. In other particular embodiments, a combination of a relatively coarse average particle diameter of an ionic conductor powder material with a relatively coarse average particle diameter of an electronic conductor powder material can comprise an average particle diameter of an ionic conductor powder material no greater than about 3.5 microns, such as no greater than about 3.4 microns, no greater than about 3.3 microns, no greater than about 3.2 microns, no greater than about 3.1 microns, or even no greater than about 3.0 microns. Also an average particle diameter of the ionic conductor powder material in the combination with a relatively coarse average particle diameter of an electronic conductor powder material can be in a range of any of the average particle diameters of the ionic conductor powder material described herein. In a particular instance, an average particle diameter of the ionic conductor powder material in the combination with a relatively coarse average particle diameter of an electronic conductor powder material can be in a range of 2.6 microns to 3.10 microns.

In a non-limiting embodiment, a combination of a relatively coarse average particle diameter of an ionic conductor powder material with a relatively coarse average particle diameter of an electronic conductor powder material can comprise an average particle diameter of an electronic conductor powder material no less than about 2.5 microns, such as no less than about 2.6 microns, no less than about 2.7 microns, no less than about 2.8 microns, no less than about 2.9 microns, or even no less than about 3.0 microns. In other particular embodiments, a combination of a relatively coarse average particle diameter of an ionic conductor powder material with a relatively coarse average particle diameter of an electronic conductor powder material can comprise an average particle diameter of an electronic conductor powder material no greater than about 3.5 microns, such as no greater than about 3.4 microns, no greater than about 3.3 microns, no greater than about 3.2 microns, no greater than about 3.1 microns, or even no greater than about 3.0 microns. Also an average particle diameter of the electronic conductor powder material in the combination with a relatively coarse average particle diameter of an ionic conductor powder material can be in a range of any of the average particle diameters of the electronic conductor powder material described herein. In a particular instance, an average particle diameter of the electronic conductor powder material in the combination with a relatively coarse average particle diameter of an ionic conductor powder material can be in a range of 2.8 microns to 3.2 microns. In another aspect, the raw powder can include a ratio of a volume of the ionic conductor powder material to the volume of the electronic conductor powder material. In certain embodiments, a ratio of a volume of ionic conductor powder material to a volume of electronic conductor powder material can be greater than 1:1, no less than 1.1:1, no less than 1.2:1, no less than 1.3:1, no less than 1.4:1, no less than 1.5:1, no less than 1.6:1, no less than 1.7:1, no less than 1.8:1, no less than 1.9:1, no less than 2.0:1, no less than 2.1:1, no less than 2.2:1, no less than 2.3:1, or even no less than 2.4:1. In certain further embodiments, a ratio of a volume of ionic conductor powder material to a volume of electronic conductor powder material can be no greater than 2.5:1, no greater than 2.4:1, no greater than 2.3:1, no greater than 2.2:1, no greater than 2.1:1, no greater than 2.0:1, no greater than 1.9:1, no greater than 1.8:1, no greater than 1.7:1, no greater than 1.6:1, or even no greater than 1.5:1. In particular embodiments, a ratio of a volume of ionic conductor powder material to a volume of electronic conductor powder material can be within a range between and including any of the ratios of volume of ionic conductor powder material to a volume of electronic conductor powder material described herein. For example, in a particular instance, a ratio of a volume of ionic conductor powder material to a volume of electronic conductor powder material can be within a range of 1.4:1 to 1.6:1.

In yet another aspect, the raw powder having a ratio of a volume of the ionic conductor powder material to the volume of the electronic conductor powder material that is no less than 1.8:1 has surprisingly been found to exhibit an increased power density as a cathode functional layer 111 in an SOFC in comparison to a cathode functional layer formed from a raw powder having a ratio of a volume of the ionic conductor powder material to the volume of the electronic conductor powder material that is no greater than 1.7:1, and having a substantially similar average particle size ratio (d₅₀₍ᵢ₎:d₅₀₍ₑ₎), or substantially similar average particle diameters of the ionic conductor powder material and the electronic conductor powder material, as the raw powder having a ratio of a volume of the ionic conductor powder material to the volume of the electronic conductor powder material that is no less than 1.8:1. For example, in one particular instance, a ratio of a volume of ionic conductor powder material to a volume of electronic conductor powder material can be within a range of 1.8:1 to 2.4:1. In another particular instance, a ratio of a volume of ionic conductor powder material to a volume of electronic conductor powder material can be within a range of 2.1:1 to 2.3:1.

It will be appreciated that having a substantially similar average particle size ratio (d₅₀₍ᵢ₎:d₅₀₍ₑ₎) as the raw powder having a ratio of a volume of the ionic conductor powder material to the volume of the electronic conductor powder material that is no less than 1.8:1 means having an average particle size ratio (d₅₀₍ᵢ₎:d₅₀₍ₑ₎) within 10% of the raw powder having a ratio of a volume of the ionic conductor powder material to the volume of the electronic conductor powder material that is no less than 1.8:1, such as within 8%, within 5%, or even within 2%.

It will also be appreciated that having substantially similar average particle diameters of the ionic conductor powder material and the electronic conductor powder material as the raw powder having a ratio of a volume of the ionic conductor powder material to the volume of the electronic conductor powder material that is no less than 1.8:1 means having an average particle diameters within 10% of either the ionic conductor powder material or the electronic conductor powder material of the raw powder having a ratio of a volume of the ionic conductor powder material to the volume of the electronic conductor powder material that is no less than 1.8:1, such as within 8%, within 5%, or even within 2%.

In further embodiments, the ionic conductor powder material can be present in the layer in an amount of no less than about 20 vol.%, no less than about 30 vol.%, no less than about35 vol.%, no less than 40 vol.%, no less than about 50 vol.%, or even no less than about 60 vol.%. In even further embodiments, the ionic conductor powder material can be present in the layer in an amount of no greater than about 80 vol.%, no greater than about 75 vol%, not greater than about 70 vol.%, or no greater than about 65 vol.%. In particular embodiments, a volume of the ionic conductor powder material can be within a range between and including any of the volume % of ionic conductor powder material described herein.

In certain embodiments, the cathode functional layer 111 can have no less than about 0.2 TPB points per µm², no less than about 0.5 TPB points per µm², no less than about 1 TPB points per µm², or even no less than about 1.5 TPB points per µm², no less than about 1.8 TPB points per µm², or even no less than about 2.3 TPB points per µm². In further embodiments, the cathode functional layer 111 can have a range of TPB points per µm² within a range of no less than about 0.2 TPB points per µm² to 4 TPB points per µm², no less than about 0.5 TPB points per µm² to 4 TPB points per µm², or even greater than about 1.5 TPB points per µm² to no greater than 4 TPB points per µm², no less than about 1.8 TPB points per µm² to no greater than 4 TPB points per µm², or even no less than about 2.3 TPB points per µm² to no greater than 4 TPB points per µm². In certain embodiments, a layer, and particularly, a cathode functional layer as described herein can have TPB points per µm² which is greater than a cathode functional layer having a ratio of an average particle diameter of the ionic conductor powder material to an average particle diameter of the electronic conductor powder material of 1:1. In particular, the layer described herein can have at least 5% greater, at least 10% greater, at least 15% greater, at least 20% greater, at least 25% greater, or even at least about 30% greater than a cathode functional layer having a ratio of an average particle diameter of the ionic conductor powder material to an average particle diameter of the electronic conductor powder material of 1:1. It was completely surprising and unexpected that a greater number of TPB points per µm² could be achieved with the CFL as described herein in comparison to a CFL having a ratio of an average particle diameter of the ionic conductor powder material to an average particle diameter of the electronic conductor powder material of 1:1.

The cathode functional layer 111 may facilitate suitable electrical characteristics of the finished SOFC article, and improve electrical, electro-chemical, and mechanical connection between the electrolyte and the cathode. In particular, the cathode functional layer 111 can be a particularly porous layer. In certain embodiments, the cathode functional layer 111 having an average particle diameter ratio of the ionic conductor powder material to the electronic conductor powder material as described herein, and in particular, greater than a 1.5:1 ratio, can exhibit a higher porosity that than a layer having an average particle diameter ratio of the ionic conductor powder material to the electronic conductor powder material of about 1:1. In certain embodiments, the cathode functional layer 111 according to the embodiments described herein can have a first porosity. A different cathode functional layer has a second porosity in which the different cathode functional layer is substantially identical to the cathode functional layer 111 except the different cathode functional layer has an average particle diameter ratio of the ionic conductor powder material to the electronic conductor powder material of about 1:1. The first porosity can be no less than 5%, no less than 10%, no less than 15%, no less than 20%, or even no less than 25% greater than the second porosity. In particular embodiments, the cathode functional layer 111 can have a porosity of greater than about 10%, greater than about 15%, greater than about 17%, greater than about 18%, greater than about 19%, greater than about 20%, greater than about 22%, greater than about 23%, greater than about 24%, or even greater than about 25%. It was completely surprising and unexpected that a higher porosity could be achieved with the CFL as described herein in comparison to a CFL having a ratio of an average particle diameter of the ionic conductor powder material to an average particle diameter of the electronic conductor powder material of 1:1.

The cathode functional layer 111 can be a thin and substantially planar layer of material having an average thickness that is less than the average thickness of the cathode bulk layer 113. In particular, the cathode functional layer 111 can have an average thickness of not greater than about 1 mm, such as not greater than about 700 microns, not greater than about 500 microns, not greater than about 200 microns, not greater than about 150 microns, such as not greater than about 100 microns, or even not greater than about 50 microns. Still, the cathode functional layer 111 can have an average thickness of at least about 0.5 microns, such as at least about 1 micron, at least about 5 microns, at least about 10 microns, at least about 15 microns, or even at least about 20 microns. It will be appreciated that the cathode functional layer 111 can have an average thickness within a range between any of the minimum and maximum values noted above.

The electrolyte layer 101 can include an inorganic material, such as a ceramic material. For example, the electrolyte layer 101 can include an oxide material. Some suitable oxides can include zirconia (ZrO₂), and more particularly, zirconia-based materials that can incorporate other elements such as stabilizers or dopants, which can include elements such as yttria (Y), ytterbium (Yb), cerium (Ce), scandium (Sc), samarium (Sm), gadolinium (Gd), lanthanum (La), praseodymium (Pr), neodymium (Nd), and a combination thereof. Particular examples of suitable electrolyte materials can include Sc₂O₃-doped ZrO₂, Y₂O₃-doped ZrO₂, Yb₂O₃-doped ZrO₂, Sc₂O₃-doped and CeO₂-doped ZrO₂, and a combination thereof. The electrolyte layer 101 can also include ceria (CeO₂), and more particularly ceria-based materials, such as Sm₂O₃-doped CeO₂, Gd₂O₃-doped CeO₂, Y₂O₃-doped CeO₂, and CaO-doped CeO₂. The electrolyte material 101 can also include lanthanide-based materials, such as LaGaO₃. The lanthanide-based materials can be doped with particular elements, including but not limited to, Ca, Sr, Ba, Mg, Co, Ni, Fe, and a combination thereof. Some exemplary electrolyte materials include La_{0.8}Sr_{0.2}Ga_{0.8}Mn_{0.2}O₃, La_{0.8}Sr_{0.2}Ga_{0.8}Mn_{0.15}Co_{0.5}O₃, La_{0.9}Sr_{0.1}Ga_{0.8}Mn_{0.2}O₃, LaSrGaO₄, LaSrGa₃O₇, or La_{0.9}A_{0.1}GaO₃, wherein A represents one of the elements from the group Sr, Ca, or Ba. According to one particular embodiment, the electrolyte layer 101 can be made of ZrO₂ doped with 8 mol % Y₂O₃ (i.e., 8 mol % Y₂O₃-doped ZrO₂). The 8 mol % Y₂O₃ can have particular dopants, such as A1 and/or Mn to facilitate sintering of the electrolyte material. Other exemplary electrolyte materials can include doped yttrium-zirconate (e.g., Y₂Zr₂O₇), doped gadolinium-titanate (e.g., Gd₂Ti₂O₇) and brownmillerites (e.g., Ba₂In₂O₆ or Ba₂In₂O₅).

The electrolyte layer 101 can be a particularly thin, planar layer of material. For example, the electrolyte layer 101 can have an average thickness of not greater than about 1 mm, such as not greater than about 500 microns, such as not greater than about 300 microns, not greater than about 200 microns, not greater than about 100 microns, not greater than about 80 microns, not greater than about 50 microns, or even not greater than about 25 microns. Still, the electrolyte layer 101 can have an average thickness of at least about 1 micron, such as at least about 2 microns, at least about 5 microns, at least about 8 microns, or at least about 10 microns. It will be appreciated that the electrolyte layer 101 can have an average thickness within a range between any of the minimum and maximum values noted above.

The electrolyte layer 101 can be formed via casting, deposition, printing, extruding, lamination, die-pressing, gel casting, spray coating, screen printing, roll compaction, injection molding, and a combination thereof. The electrolyte layer 101 can be formed individually or subsequently to formation of other layers. For example, the electrolyte layer 101 can be formed on one of the other previously-formed layers (e.g., the anode layer 103 or the cathode layer 105). Notably, in a particular embodiment, the formation of the electrolyte layer 101 includes formation of a green layer of material, which is not necessarily sintered before forming a green unit cell 100, which is then sintered in a single sintering process (e.g., a single, free-sintering process).

The electrolyte layer 101 can be formed from a powder electrolyte material having a particular particle size that facilitates formation of a unit cell according to the embodiments herein. For example, the powder electrolyte material can have an average particle size of less than about 100 microns, such as less than about 50 microns, less than about 20 microns, less than about 10 microns, less than about 5 microns, or even less than about 1 micron. Still, in particular instances, the average particle size of the powder electrolyte material can be at least about 0.01 microns, at least about 0.05 microns, at least about 0.08 microns, at least about 0.1 microns, or even at least about 0.2 microns. It will be appreciated that the powder electrolyte material can have an average particle size within a range including any of the minimum and maximum values noted above.

In certain further embodiments the SOFC may further include an interconnect layer overlaying the anode layer.

The interconnect layer can include a ceramic material, including an inorganic material. In particular, the interconnect layer can include an oxide material. More particularly, the interconnect layer can include an element selected from the group consisting of lanthanum (La), manganese (Mn), strontium (Sr), titanium (Ti), niobium (Nb), calcium (Ca), gallium (Ga), cobalt (Co), yttria (Y), and a combination thereof. In certain instances, the interconnect layer can include chromium oxide-based materials, nickel oxide-based materials, cobalt oxide-based materials, and titanium oxide-based materials (e.g., lanthanium strontium titanate). In particular, the interconnect layer can be made of a material, such as LaSrCrO₃, LaMnCrO₃, LaCaCrO₃, YCrO₃, LaCrO₃, LaCoO₃, CaCrO₃, CaCoO₃, LaNiO₃, LaCrO₃, CaNiO₃, CaCrO₃, and a combination thereof. In particular, the interconnect layer can comprise LST (or YST), and may consist essentially of Nb doped LST, such as, La_{0.2} Sr_{0.8}TiO₃, having one or more dopants. It will be appreciated that the interconnect material may include an A-site deficient material, wherein for example, some lattice sites typically occupied by lanthanum or strontium cations are vacant, and thus the material has a non-stoichiometric composition.

The interconnect layer can be a particularly thin, planar layer of material. For example, the interconnect layer can have an average thickness of not greater than about 1 mm, such as not greater than about 500 microns, not greater than about 300 microns, not greater than about 200 microns, not greater than about 100 microns, not greater than about 80 microns, not greater than about 50 microns, or even not greater than about 35 microns. Still, the interconnect layer can have an average thickness of at least about 1 micron, such as at least about 2 microns, at least about 5 microns, at least about 8 microns, or at least about 10 microns. It will be appreciated that the interconnect layer can have an average thickness within a range between any of the minimum and maximum values noted above.

The interconnect layer can be formed using a process similar to the formation of the electrolyte layer 101, including for example, casting, deposition, printing, extruding, lamination, die-pressing, gel casting, spray coating, screen printing, roll compaction, injection molding, and a combination thereof. The interconnect layer can be formed individually, or subsequently to formation of other layers, such that the interconnect layer can be formed on one of the other previously-formed layers (e.g., the anode layer 103). Notably, in a particular embodiment, the formation of the interconnect layer includes formation of a green layer of material, which is not necessarily sintered before forming a green unit cell 100, which is then sintered in a single sintering process (e.g., a single, free-sintering process).

The interconnect layer can be formed from a powder interconnect material having a particular particle size that facilitates formation of a unit cell according to the embodiments herein. For example, the powder interconnect material can have an average particle size of less than about 100 microns, such as less than about 50 microns, less than about 20 microns, less than about 10 microns, less than about 5 microns, or even less than about 1 micron. Still, in particular instances, the average particle size of the powder interconnect material can be at least about 0.01 microns, at least about 0.05 microns, at least about 0.08 microns, at least about 0.1 microns, at least about 0.2 microns, or even at least about 0.4 microns. It will be appreciated that the powder interconnect material can have an average particle size within a range including any of the minimum and maximum values noted above.

In certain embodiments, when a layer, particularly the cathode functional layer, having a ratio of an average particle diameter of the ionic conductor powder material to an average particle diameter of the electronic conductor powder material of greater than about 1.5:1 as described herein is employed in an SOFC, the SOFC can have a maximum power density which is greater than the maximum power density of an SOFC with a layer, particularly the cathode functional layer, having a ratio of an average particle diameter of the ionic conductor powder material to an average particle diameter of the electronic conductor powder material of less than about 1.5:1, such as about 1:1, and having a substantially similar ratio of a volume of the ionic conductor powder material to the volume of the electronic conductor powder material, or a substantially similar average particle diameter of an electronic conductor powder material, as the layer described herein having a ratio of an average particle diameter of the ionic conductor powder material to an average particle diameter of the electronic conductor powder material of greater than about 1.5:1. In particular embodiments, the maximum power density can be no less than 5% greater, no less than 10% greater, or no less than 15% greater than the maximum power density of an SOFC with a layer having a ratio of an average particle diameter of the ionic conductor powder material to an average particle diameter of the electronic conductor powder material of less than about 1.5:1, such as about 1:1. It was completely surprising and unexpected that a higher maximum power density could be achieved with the CFL as described herein having a ratio of an average particle diameter of the ionic conductor powder material to an average particle diameter of the electronic conductor powder material of greater than about 1.5:1 in comparison with a CFL having a ratio of an average particle diameter of the ionic conductor powder material to an average particle diameter of the electronic conductor powder material of less than about 1.5:1, such as about 1:1, and having a substantially similar ratio of a volume of the ionic conductor powder material to the volume of the electronic conductor powder material, or a substantially similar average particle diameter of an electronic conductor powder material, as the CFL described herein having a ratio of an average particle diameter of the ionic conductor powder material to an average particle diameter of the electronic conductor powder material of greater than about 1.5:1.

It will be appreciated that having a substantially similar ratio of a volume of the ionic conductor powder material to the volume of the electronic conductor powder material as the layer described herein having a ratio of an average particle diameter of the ionic conductor powder material to an average particle diameter of the electronic conductor powder material of greater than about 1.5:1 means having ratio of a volume of the ionic conductor powder material to the volume of the electronic conductor powder material within 10% of the layer described herein having a ratio of an average particle diameter of the ionic conductor powder material to an average particle diameter of the electronic conductor powder material of greater than about 1.5:1, such as within 8%, within 5%, or even within 2%.

It will also be appreciated that having a substantially similar average particle diameter of the electronic conductor powder material as the layer described herein having a ratio of an average particle diameter of the ionic conductor powder material to an average particle diameter of the electronic conductor powder material of greater than about 1.5:1 means having an average particle diameter of the electronic conductor powder material within 10% of the electronic conductor powder material of the layer described herein having a ratio of an average particle diameter of the ionic conductor powder material to an average particle diameter of the electronic conductor powder material of greater than about 1.5:1, such as within 8%, within 5%, or even within 2%.

In certain embodiments, when a layer, particularly the cathode functional layer, having a combination of a relatively coarse average particle diameter of an ionic conductor powder material with a relatively coarse average particle diameter of an electronic conductor powder material as described herein is employed in an SOFC, the SOFC can have a maximum power density which is greater than the maximum power density of an SOFC with a layer, particularly the cathode functional layer, having one or both of an ionic conductor powder material and an electronic conductor powder material with a respectively finer average particle diameter, and having a substantially similar ratio of a volume of the ionic conductor powder material to the volume of the electronic conductor powder material, or a substantially similar average particle diameter of an ionic conductor powder material, as the layer described herein having a combination of a relatively coarse average particle diameter of an ionic conductor powder material with a relatively coarse average particle diameter of an electronic conductor powder material. In particular embodiments, the maximum power density can be no less than 5% greater, no less than 10% greater, or no less than 15% greater than the maximum power density of an SOFC with a layer having one or both of an ionic conductor powder material and an electronic conductor powder material with a respectively finer average particle diameter. It was completely surprising and unexpected that a higher maximum power density could be achieved with the CFL as described herein having a combination of a relatively coarse average particle diameter of an ionic conductor powder material with a relatively coarse average particle diameter of an electronic conductor powder material in comparison with a CFL having one or both of an ionic conductor powder material and an electronic conductor powder material with a respectively finer average particle diameter, and having a substantially similar ratio of a volume of the ionic conductor powder material to the volume of the electronic conductor powder material, or a substantially similar average particle diameter of an ionic conductor powder material, as the CFL described herein having a combination of a relatively coarse average particle diameter of an ionic conductor powder material with a relatively coarse average particle diameter of an electronic conductor powder material.

It will also be appreciated that having a substantially similar average particle diameter of the ionic conductor powder material as the layer described herein having a combination of a relatively coarse average particle diameter of an ionic conductor powder material with a relatively coarse average particle diameter of an electronic conductor powder material means having an average particle diameter of the ionic conductor powder material within 10% of the ionic conductor powder material of the layer described herein having a combination of a relatively coarse average particle diameter of an ionic conductor powder material with a relatively coarse average particle diameter of an electronic conductor powder material, such as within 8%, within 5%, or even within 2%.

In certain embodiments, when a layer, particularly the cathode functional layer, having a ratio of a volume of the ionic conductor powder material to the volume of the electronic conductor powder material that is no less than 1.8:1 as described herein is employed in an SOFC, the SOFC can have a maximum power density which is greater than the maximum power density of an SOFC with a layer, particularly the cathode functional layer, having a ratio of a volume of the ionic conductor powder material to the volume of the electronic conductor powder material that is no greater than 1.7:1, and having a substantially similar average particle size ratio (d₅₀₍ᵢ₎:d₅₀₍ₑ₎), or a substantially similar average particle diameter of an ionic conductor powder material or an electronic conductor powder material, as the layer described herein having a ratio of a volume of the ionic conductor powder material to the volume of the electronic conductor powder material that is no less than 1.8:1. In particular embodiments, the maximum power density can be no less than 5% greater, no less than 10% greater, or no less than 15% greater than the maximum power density of an SOFC with a layer having a ratio of a volume of the ionic conductor powder material to the volume of the electronic conductor powder material that is no greater than 1.7:1. It was completely surprising and unexpected that a higher maximum power density could be achieved with the CFL as described herein having a ratio of a volume of the ionic conductor powder material to the volume of the electronic conductor powder material that is no less than 1.8:1 in comparison with a CFL having a ratio of a volume of the ionic conductor powder material to the volume of the electronic conductor powder material that is no greater than 1.7:1, and having a substantially similar average particle size ratio (d₅₀₍ᵢ₎:d₅₀₍ₑ₎), or a substantially similar average particle diameter of an ionic conductor powder material or an electronic conductor powder material, as the CFL described herein having a ratio of a volume of the ionic conductor powder material to the volume of the electronic conductor powder material that is no less than 1.8:1.

In certain embodiments, when a layer, particularly the cathode functional layer, having an average particle diameter of at least one of the electronic conductor powder material d₅₀₍ₑ₎ or the ionic conductor powder material (d₅₀₍ᵢ₎) that is no less than about 1.5 microns is employed in an SOFC, the SOFC can have a maximum power density of no less than about 5% greater than the power density of a different SOFC which is substantially identical to the solid oxide fuel cell except that a layer of the different SOFC has at least one of an average particle diameter of an ionic conductor material or average particle diameter of an electronic conductor material that is less than about 1.5 microns

In certain embodiments, when a layer, particularly the cathode functional layer, having a ratio of an average particle diameter of the ionic conductor powder material to an average particle diameter of the electronic conductor powder material of greater than about 1.5:1 as described herein is employed in an SOFC, the SOFC can have a voltage drop which is less than the voltage drop of an SOFC with a layer, particularly the cathode functional layer, having a ratio of an average particle diameter of the ionic conductor powder material to an average particle diameter of the electronic conductor powder material of less than about 1.5, such as about 1:1, and having a substantially similar ratio of a volume of the ionic conductor powder material to the volume of the electronic conductor powder material, or a substantially similar average particle diameter of an electronic conductor powder material, as the layer described herein having a ratio of an average particle diameter of the ionic conductor powder material to an average particle diameter of the electronic conductor powder material of greater than about 1.5:1. The voltage drop at high current densities is a measurement of gas diffusion limitations of the oxygen gas phase. In particular embodiments, the voltage drop can be at least 5% less, at least 10% less, or at least 15% less than the voltage of an SOFC with a layer having a ratio of an average particle diameter of the ionic conductor powder material to an average particle diameter of the electronic conductor powder material of less than about 1.5:1, such as about 1:1. It was completely surprising and unexpected that a lower voltage drop could be achieved with the CFL as described herein having a ratio of an average particle diameter of the ionic conductor powder material to an average particle diameter of the electronic conductor powder material of greater than about 1.5:1 in comparison to a CFL having a ratio of an average particle diameter of the ionic conductor powder material to an average particle diameter of the electronic conductor powder material of less than about 1.5:1, such as about 1:1, and having a substantially similar ratio of a volume of the ionic conductor powder material to the volume of the electronic conductor powder material, or a substantially similar average particle diameter of an electronic conductor powder material, as the CFL described herein having a ratio of an average particle diameter of the ionic conductor powder material to an average particle diameter of the electronic conductor powder material of greater than about 1.5:1.

In certain embodiments, when a layer, particularly the cathode functional layer, having a combination of a relatively coarse average particle diameter of an ionic conductor powder material with a relatively coarse average particle diameter of an electronic conductor powder material as described herein is employed in an SOFC, the SOFC can have a voltage drop which is less than the voltage drop of an SOFC with a layer, particularly the cathode functional layer, having one or both of an ionic conductor powder material and an electronic conductor powder material with a respectively finer average particle diameter, and having a substantially similar ratio of a volume of the ionic conductor powder material to the volume of the electronic conductor powder material, or a substantially similar average particle diameter of an ionic conductor powder material, as the layer described herein having a combination of a relatively coarse average particle diameter of an ionic conductor powder material with a relatively coarse average particle diameter of an electronic conductor powder material. In particular embodiments, the voltage drop can be no less than 5% greater, no less than 10% greater, or no less than 15% greater than the maximum power density of an SOFC with a layer having one or both of an ionic conductor powder material and an electronic conductor powder material with a respectively finer average particle diameter. It was completely surprising and unexpected that a lower voltage drop could be achieved with the CFL as described herein having a combination of a relatively coarse average particle diameter of an ionic conductor powder material with a relatively coarse average particle diameter of an electronic conductor powder material in comparison with a CFL having one or both of an ionic conductor powder material and an electronic conductor powder material with a respectively finer average particle diameter, and having a substantially similar ratio of a volume of the ionic conductor powder material to the volume of the electronic conductor powder material, or a substantially similar average particle diameter of an ionic conductor powder material, as the CFL described herein having a combination of a relatively coarse average particle diameter of an ionic conductor powder material with a relatively coarse average particle diameter of an electronic conductor powder material.

In certain embodiments, when a layer, particularly the cathode functional layer, having a ratio of a volume of the ionic conductor powder material to the volume of the electronic conductor powder material that is no less than 1.8:1 as described herein is employed in an SOFC, the SOFC can have a voltage drop which is greater than the voltage drop of an SOFC with a layer, particularly the cathode functional layer, having a ratio of a volume of the ionic conductor powder material to the volume of the electronic conductor powder material that is no greater than 1.7:1, and having a substantially similar average particle size ratio (d₅₀₍ᵢ₎:d₅₀₍ₑ₎), or a substantially similar average particle diameter of an ionic conductor powder material or an electronic conductor powder material, as the layer described herein having a ratio of a volume of the ionic conductor powder material to the volume of the electronic conductor powder material that is no less than 1.8:1. In particular embodiments, the voltage drop can be no less than 5% greater, no less than 10% greater, or no less than 15% greater than the maximum power density of an SOFC with a layer having a ratio of a volume of the ionic conductor powder material to the volume of the electronic conductor powder material that is no greater than 1.7:1. It was completely surprising and unexpected that a lower voltage drop could be achieved with the CFL as described herein having a ratio of a volume of the ionic conductor powder material to the volume of the electronic conductor powder material that is no less than 1.8:1 in comparison with a CFL having a ratio of a volume of the ionic conductor powder material to the volume of the electronic conductor powder material that is no greater than 1.7:1, and having a substantially similar average particle size ratio (d₅₀₍ᵢ₎:d₅₀₍ₑ₎), or a substantially similar average particle diameter of an ionic conductor powder material or an electronic conductor powder material, as the CFL described herein having a ratio of a volume of the ionic conductor powder material to the volume of the electronic conductor powder material that is no less than 1.8:1.

According to another aspect, a method of forming a layer configured for a solid oxide fuel cell can comprise: providing an ionic conductor powder material and an electronic conductor powder material; and forming a layer, for example, a functional layer from the ionic conductor powder material and the electronic conductor powder material. The raw powder and resulting layer can contain any of the parameters or characteristics described above.

Before assembling the component layers in the unit cell 100 as illustrated in FIG. 1, each of the layers can be formed individually. That is, the layers can be formed separately (e.g., as green layers) and assembled together into the unit cell 100. Alternatively, the layers may be formed (e.g., in green state) in succession on each other. After forming of the green layers, the entire stack can be heat treated, for example, by sintering to form the unit cell 100.

The layers described according to the embodiments herein can be formed through techniques including, but not limited to, hot pressing, co-sintered, co-fired, hot isostatically pressed (HIP), casting, deposition, printing, extruding, lamination, die-pressing, gel casting, spray coating, screen printing, roll compaction, injection molding, and a combination thereof. In one particular instance, one or more of the layers can be formed via hot pressing. In other particular embodiments, the layer can be formed by co-sintering.

In certain embodiments, the layer (or unit cell, i.e. multiple green layers) can be formed at a temperature of no less than 1000°C, no less than 1050°C, or even no less than 1100°C. In further embodiments, the layer (or unit cell, i.e. multiple green layers) can be formed at a temperature of no greater than 1500°C, no greater than 1450°C, or even no greater than 1400°C. It will be appreciated that the layer can be formed at a temperature within a range including any of the minimum and maximum values noted above

In certain embodiments, the layer (or unit cell, i.e. multiple green layers) can be formed at a pressure in a range between about 0 to 20 MPa, between about 2 to 18 MPa, between about 4 to 16 MPa, or even between about 6 to 14 MPa. In particular embodiments, the layer can be formed at atmospheric pressure.

The present disclosure represents a departure from the state of the art. As described herein, and further illustrated by the Examples below, it was unexpectedly and surprisingly discovered that the embodiments described herein exhibited significantly better performance in at least power density than would be expected based on conventional knowledge in the art. See, for example X.J. Chen et al., "Simulation of a Composite Cathode in Solid Oxide Fuel Cells" Electrochimica Acta, vol. 49, p. 1851-1861 (2004).

[Item 1] A raw powder material configured to form a layer of a solid oxide fuel cell of claim 1,comprising: an ionic conductor powder material; and an electronic conductor powder material; wherein a ratio of an average particle diameter of the ionic conductor powder material to an average particle diameter of the electronic conductor powder material is from greater than about 1.5: 1.

[Item 2] An electrode for a solid oxide fuel cell of claim 1 comprising: a functional layer; and a bulk layer, wherein the functional layer is formed from a raw powder material comprising: an ionic conductor powder material; and an electronic conductor powder material; wherein a ratio of an average particle diameter of the ionic conductor powder material to an average particle diameter of the electronic conductor powder material is greater than about 1.5: 1.

[Item 3] A solid oxide fuel cell of claim 1, comprising: a layer formed from an ionic conductor powder material and an electronic conductor powder material, wherein a ratio of an average particle diameter of the ionic conductor powder material to an average particle diameter of the electronic conductor powder material is greater than about 1.5:1.

[Item 4] The solid oxide fuel cell of item 3, wherein the solid oxide fuel cell comprises: an anode and a cathode, wherein the cathode comprises: the layer as a cathode functional layer; and a bulk cathode layer.

[Item 5] The solid oxide fuel cell of any one of items 3-4, wherein the solid oxide fuel cell has a maximum power density of no less than 5%, no less than 10%, or no less than 15% greater than the power density of a different SOFC which is substantially identical to the solid oxide fuel cell except that the layer has a ratio of an average particle diameter of the ionic conductor powder material to an average particle diameter of the electronic conductor powder material of about 1:1.

[Item 6] A method of forming a layer of a solid oxide fuel cell of claim 1, comprising: providing an ionic conductor powder material and an electronic conductor powder material; and forming a layer from the ionic conductor powder material and the electronic conductor powder material; wherein, a ratio of an average particle diameter of the ionic conductor powder material to an average particle diameter of the electronic conductor powder material is greater than about 1.5:1.

[Item 7] The method according to item 6, wherein the layer is formed into a green state by casting.

[Item 8] The method according to item 7, wherein after casting, the layer is sintered or hot-pressed.

[Item 9] The method according to item 8, wherein the layer is sintered or hot-pressed with additional layers.

[Item 10] The method according to item 8, wherein the layer is sintered or hot-pressed at a temperature of no less than 1000°C, no less than 1050°C, or even no less than 1100°C.

[Item 11] The method according to item 8, wherein the layer is sintered or hot-pressed at a temperature of no greater than 1500°C, no greater than 1450°C, or even no greater than 1400°C.

[Item 12] The method according to item 8, wherein the layer is sintered or hot-pressed at a pressure in a range of from about 0 MPa to 20 MPa, between about 2 to 18 MPa, between about 4 to 16 MPa, or even between about 6 to 14 MPa.

[Item 13] The method according to claim 8, wherein the layer is sintered at atmospheric pressure.

[Item 14] The solid oxide fuel cell or method of any one of the preceding items, wherein the layer is a cathode functional layer and wherein the solid oxide fuel cell further comprises a cathode bulk layer adjacent the cathode functional layer and an electrolyte layer adjacent the cathode functional layer.

[Item 15] The solid oxide fuel cell or method of any one of the preceding items, wherein the layer is a cathode functional layer and wherein the solid oxide fuel cell further comprises a cathode bulk layer adjacent the cathode functional layer and an electrolyte layer adjacent the cathode functional layer, and wherein the solid oxide fuel cell further comprises an anode functional layer and an anode bulk layer.

[Item 16] The solid oxide fuel cell or method of item 15, wherein the anode functional layer comprises an oxide, and wherein the oxide comprises NiO.

[Item 17] The powder material, electrode, solid oxide fuel cell, or method of any one of the preceding items, wherein the layer is formed by co-sintering.

[Item 18] The powder material, electrode, solid oxide fuel cell, or method of any one of the preceding items, wherein the layer is a cathode functional layer.

[Item 19] The powder material, solid oxide fuel cell, or the method of any one of the preceding items wherein the average particle diameter of the ionic conductor powder material is no less than about 0.5 microns, no less than about 1 microns, no less than about 1.5 microns, or no less than about 1.8 microns.

[Item 20] The powder material, solid oxide fuel cell, or the method of any one of the preceding items wherein the average particle diameter of the ionic conductor powder material is greater than about 2 microns, no less than about 2.2 microns, or no less than about 2.5 microns.

[Item 21] The powder material, solid oxide fuel cell, or the method of any one of the preceding items wherein the average particle diameter of the electronic conductor powder material is no less than about 0.1 microns, no less than about 0.5 microns, or no less than about 1 microns.

[Item 22] The powder material, solid oxide fuel cell, or the method of any one of the preceding items wherein the average particle diameter of the electronic conductor powder material is no greater than 50 microns, no greater than 10 microns, no greater than 5 microns, no greater than 4 microns, no greater than 3 microns, or no greater than 2 microns.

[Item 23] The powder material, solid oxide fuel cell, or the method of any one of the preceding items, wherein the a ratio of an average particle diameter of the ionic conductor powder material to an average particle diameter of the electronic conductor powder material is less than about 10:1, less than about 5:1, less than about 4:1, less than about 3:1, less than about 2.5:1.

[Item 24] The powder material, solid oxide fuel cell, or the method of any one of the preceding items, wherein the a ratio of an average particle diameter of the ionic conductor powder material to an average particle diameter of the electronic conductor powder material is greater than about 1.8:1.

[Item 25] The powder material, solid oxide fuel cell, or the method of any one of the preceding items, wherein the a ratio of an average particle diameter of the ionic conductor powder material to an average particle diameter of the electronic conductor powder material is greater than about 1.9:1.

[Item 26] The powder material, solid oxide fuel cell, or the method of any one of the preceding items, wherein the a ratio of an average particle diameter of the ionic conductor powder material to an average particle diameter of the electronic conductor powder material is no less than about 2:1.

[Item 27] The powder material, solid oxide fuel cell, or the method of any one of the preceding items, wherein the ionic conductor powder material comprises an inorganic material.

[Item 28] The powder material, solid oxide fuel cell, or the method of any one of the preceding items, wherein the ionic conductor powder material comprises an oxide material.

[Item 29] The powder material, solid oxide fuel cell, or the method of any one of the preceding items, wherein the ionic conductor powder material comprises zirconia (ZrO₂).

[Item 30] The powder material, solid oxide fuel cell, or the method of any one of the preceding items, wherein the ionic conductor powder material comprises a stabilizer or dopant.

[Item 31] The powder material, solid oxide fuel cell, or the method of item 24, wherein the stabilizer or dopant comprises at least one of the elements selected from the group consisting of yttria (Y), ytterbium (Yb), cerium (Ce), scandium (Sc), samarium (Sm), gadolinium (Gd), lanthanum (La), praseodymium (Pr), neodymium (Nd), and a combination thereof.

[Item 32] The powder material, solid oxide fuel cell, or the method of any one of the preceding items, wherein the ionic conductor powder material comprises yttria stabilized zirconia (YSZ).

[Item 33] The powder material, solid oxide fuel cell, or the method of any one of the preceding items, wherein the ionic conductor powder material comprises 8 mol% Y₂O₃-doped ZrO₂ or 10 mol% Y₂O₃-doped ZrO₂.

[Item 34] The powder material, solid oxide fuel cell, or the method of any one of the preceding items, wherein the ionic conductor powder material comprises Y₂ZrO₇.

[Item 35] The powder material, solid oxide fuel cell, or the method of any one of the preceding items, wherein the ionic conductor powder material consists essentially of yttria stabilized zirconia (YSZ).

[Item 36] The powder material, solid oxide fuel cell, or the method of any one of the preceding items, wherein the electronic conductor powder material comprises an inorganic material.

[Item 37] The powder material, solid oxide fuel cell, or the method of any one of the preceding items, wherein the electronic conductor powder material comprises an oxide material.

[Item 38] The powder material, solid oxide fuel cell, or the method of any one of the preceding items, wherein the electronic conductor powder material comprises a rare earth element.

[Item 39] The powder material, solid oxide fuel cell, or the method of any one of the preceding items, wherein the electronic conductor powder material comprises lanthanum (La), manganese (Mn), strontium (Sr), or a combination thereof.

[Item 40] The powder material, solid oxide fuel cell, or the method of any one of the preceding items, wherein the electronic conductor powder material comprises lanthanum strontium manganite (LSM).

[Item 41] The powder material, solid oxide fuel cell, or the method of any one of the preceding items, wherein the electronic conductor powder material comprises (La_{0.80}Sr_{0.20})_{0.98}MnO_{3-δ}.

[Item 42] The powder material, solid oxide fuel cell, or the method of any one of the preceding items, wherein the electronic conductor powder material consists essentially of lanthanum strontium manganite (LSM).

[Item 43] The powder material, solid oxide fuel cell, or the method of any one of the preceding items, wherein a ratio of a volume of ionic conductor powder material to a volume of electronic conductor powder material in the layer is greater than 1:1, no less than 1.1:1, no less than 1.2:1, or no less than 1.3:1.

[Item 44] The powder material, solid oxide fuel cell, or the method of any one of the preceding items, wherein, a ratio of a volume of ionic conductor powder material to a volume of electronic conductor powder material can be no greater than 2.5:1, no greater than 2.2:1, no greater than 2:1, or no greater than 1.8:1.

[Item 45] The powder material, solid oxide fuel cell, or the method of any one of the preceding items, wherein a ratio of a volume of ionic conductor powder material to a volume of electronic conductor powder material in the layer is in a range of greater than 1:1 to no greater than 2.5:1, no less than 1.1:1 to no greater than 2.2:1, no less than 1.2:1 to no greater than 2:1, or no less than 1.3:1 to no greater than 1.8:1.

[Item 46] The powder material, solid oxide fuel cell, or the method of any one of the preceding items, wherein the ionic conductor powder material is present in the layer in an amount of no less than 20 vol.%, no less than 30 vol.%, or no less than 35 vol.%.

[Item 47] The powder material, solid oxide fuel cell, or the method of any one of the preceding items, wherein the ionic conductor powder material is present in the layer in an amount of no greater than 80 vol.%, no greater than 70 vol.%, or no greater than 65 vol.%.

[Item 48] The powder material, solid oxide fuel cell, or the method of any one of the preceding items, wherein the ionic conductor powder material is present in the layer in a range of from 20 vol.% to 80 vol.%, 30 vol.% to 70 vol.%, or from 35 vol.% to 65 vol.%.

[Item 49] The powder material, solid oxide fuel cell, or the method of any one of the preceding items, wherein the layer has no less than about 0.2 TPB points per µm², no less than about 0.5 TPB points per µm², no less than about 1 TPB points per µm², or even no less than about 1.5 TPB points per µm², no less than about 1.8 TPB points per µm², or even no less than about 2.3 TPB points per µm².

[Item 50] The powder material, solid oxide fuel cell, or the method of any one of the preceding items, wherein the layer has a range of TPB points per µm² within a range of no less than about 0.2 TPB points per µm² to 4 TPB points per µm², no less than about 0.5 TPB points per µm² to 4 TPB points per µm², or even greater than about 1.5 TPB points per µm² to no greater than 4 TPB points per µm², no less than about 1.8 TPB points per µm² to no greater than 4 TPB points per µm², or even no less than about 2.3 TPB points per µm² to no greater than 4 TPB points per µm².

[Item 51] The solid oxide fuel cell or the method of any one of the preceding items, wherein the layer has a thickness of not greater than about 1 mm, not greater than about 700 microns, not greater than about 500 microns, not greater than about 200 microns, not greater than about 150 microns, not greater than about 100 microns, or not greater than about 50 microns.

[Item 52] The solid oxide fuel cell or the method of any one of the preceding items, wherein the layer has an average thickness of at least about 0.5 microns, at least about 1 micron, at least about 5 microns, at least about 10 microns, at least about 15 microns, or even at least about 20 microns.

### Examples

### Example 1: Comparison of Particle Size Ratio and Volume Fraction

Example 1 compares the maximum power density, voltage drop, and TPB points per area for a layer as described herein with a layer made according to the suggestions of Chen et al. (Example B). Example A, which has a ratio of less than 1:1, is also compared. The raw powders were selected and combined as indicated in Table 1 below:

**Table 1:**

| | A (comparison) | B (comparison) | C | D | E |
|---|---|---|---|---|---|
| LSM Median Paricle Size (µm) | 1.4 | | | 3.0 | 1.4 |
| YSZ Median Paricle Size (µm) | 0.9 | 1.4 | 2.8 | 2.8 | 2.8 |
| YSZ/LSM Median Paricle Size Ratio | 0.6:1 | 1:1 | 2:1 | 0.9:1 | 2:1 |
| YSZ/LSM Volume Ratio | 61:39 | | | | 70:30 |

Each of the powder mixtures of Examples A-E were then formed into a cathode functional layer by first dispersing the powders into an aqueous slurry. Each slurry in Examples A-D contained 36.7wt% LSM, 55.0wt% YSZ, and 8.3wt% graphite pore former. Each slurry was tapecast to a thickness of about 60µm. In order to produce a functional SOFC, the additional layers depicted in Figure 2 (anode bulk layer, anode functional layer, electrolyte and cathode bulk layer) were prepared in a similar process but as separate tapes; the details of each layer are described in Table 2 below. Discs (28mm in diameter) of each layer were mechanically punched out and layered as depicted in Fig. 2 and as quantified in Table 2. The layers were laminated at elevated temperature (200°F) and pressure (10,000psi). The laminated structure was hot-pressed at a maximum temperature of 1280°C and a maximum pressure of 12MPa to form a SOFC containing the cathode functional layer. The cathode functional layer was analyzed by microscopy, as illustrated below, to determine % CFL porosity and TPB points per area and by electrochemical testing, as illustrated below, to measure maximum power density and voltage drop due to gas diffusion resistance.

**Table 2:**

| | Green Thickness | Composition (wt%) | Avg. Particle Size (d₅₀) | # Green Layers Used |
|---|---|---|---|---|
| Anode bulk layer 107 | 350µm | 36.4% NiO | 0.7µm | 7 |
| | | 63.6% 10YSZ | 45µm | |
| Anode functional layer 109 | 38µm | 54.0% NiO | 0.7µm | 1 |
| | | 46.0% 10YSZ | 3.0µm | |
| Electrolye layer 101 | 30µm | 97.8% 8YSZ | 0.25µm | 1 |
| | | 0.4% Al₂O₃ | 50 nm | |
| | | 1.8% Mn₂O₃ | 0.4µm | |
| Cathode bulk layer 113 | 350µm | 100% LSM | 45µm | 7 |

### Maximum Power Density

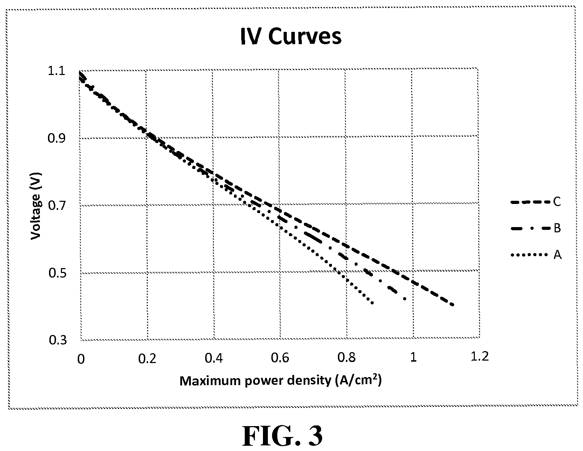

The maximum power density is a measurement of the maximum amount of power that the SOFC can produce normalized to the SOFC's area. To measure the maximum power density, the edge of the SOFC was sealed with glass to prevent leakage of the gases. The SOFC is then mounted in an apparatus that can deliver hydrogen to the anode layer and air to the cathode layer. Forming gas - 4% hydrogen in nitrogen - is flowed to the anode at 300scc/min. The cell is heated up at 4°C/min to 800°C. The hydrogen concentration flowing to the anode layer is increased step by step to reduce NiO to nickel. When the open-circuit voltage (OCV) is stable with 100% hydrogen gas flowing to the anode layer, three current-voltage (IV) curves are recorded using a potentiostat/galvanostat as illustrated in Fig. 3. The maximum power density of the SOFC is defined by the maximum current*voltage normalized to the SOFC's active area.

### Voltage Drop Due to Gas Diffusion Resistance

The voltage drop at high current densities is a measurement of diffusion limitations of the oxygen gas phase. To measure the voltage drop, the aforementioned IV curves were analyzed at a specific maximum power density (0.8 A/cm²) where diffusion is expected to be a limiting factor. The voltage at that point is subtracted from the open-circuit voltage to yield the voltage drop. A higher voltage drop is correlated with lower cell performance due to oxygen transport limitations.

### TPB Points Per Area

To measure the TPB points per area, the SOFC was mounted in resin and polished for scanning electron microscopy (SEM). Images of the cathode functional layer were taken such that contrast of the three phases (LSM, YSZ, and pore) was high. The TPB points per area was calculated for each image by counting the number of intersections of the three phases and dividing by the image area. At least 5 such images were taken of each cathode functional layer and analyzed as described to establish statistical confidence.

### % CFL Porosity

To measure the % CFL porosity, the SOFC was prepared and imaged in a scanning electron microscope (SEM) as noted above. The images of the cathode functional layer were processed using an automated software application that segmented into 3 distinct shades based on the atomic number contrast of the microscope: white (LSM phase), grey (YSZ phase), and black (pore). The software counted the area of the black (pore) region and divided by the total area of the image to yield the CFL porosity.

The results of the tests are displayed in Table 3 below:

**Table 3:**

| | A (comparison) | B (comparison) | C | D | E |
|---|---|---|---|---|---|
| Average Maximum Power Density (mW/cm²) | 340 | 390 | 450 | 517 | 503 |
| Voltage Drop @ 0.8 A/cm² (V) | 0.60 | 0.56 | 0.50 | 0.46 | 0.43 |
| CFL Porosity (%) | 11 | 15 | 19 | 22 | 16 |

## Claims

1. A solid oxide fuel cell, comprising:
an electrolyte layer;
a cathode functional layer overlying the electrolyte layer, the cathode functional layer formed from an ionic conductor powder material having a median particle diameter (d₅₀₍ᵢ₎) and an electronic conductor powder material having a median particle diameter (d₅₀₍ₑ₎); and
a cathode bulk layer overlying the cathode functional layer,
wherein the median particle diameter (d₅₀₍ᵢ₎) of the ionic conductor powder material is no less than 1.5 microns and no greater than 10 microns.

2. The solid oxide fuel cell of claim 1, wherein a ratio of the median particle diameter of the ionic conductor powder material to the median particle diameter of the electronic conductor powder material (d₅₀₍ᵢ₎:d₅₀₍ₑ₎) is greater than 0.7:1 and no greater than 10:1.

3. The solid oxide fuel cell of any one of the above claims, wherein a ratio of a volume of the ionic conductor powder material to a volume of the electronic conductor powder material is greater than 1.1:1.

4. The solid oxide fuel cell of any one of the above claims, wherein the ionic conductor powder material is present in the cathode functional layer in an amount of no less than 40 vol%.

5. The solid oxide fuel cell of any one of the above claims, wherein the ratio of the median particle diameter of the ionic conductor powder material to an average particle diameter of the electronic conductor powder material (d₅₀₍ᵢ₎:d₅₀₍ₑ₎) is greater than 0.7:1 and no greater than 5: 1.

6. The solid oxide fuel cell of any one of the above claims, wherein at least one of the median particle diameter (d₅₀₍ᵢ₎) or median particle diameter (d₅₀₍ₑ₎) is no less than 2.5 microns.

7. The solid oxide fuel cell of any one of the above claims, wherein the median particle diameter (d₅₀₍ₑ₎) of the electronic conductor powder material is no less than 0.1 microns and no greater than 5 microns;.

8. The solid oxide fuel cell of any one of the above claims, wherein the median particle diameter of both the ionic conductor powder material (d₅₀₍ᵢ₎) and the electronic conductor powder material (d₅₀₍ₑ₎) is no greater than about 3.5 microns.

9. The solid oxide fuel cell of any one of the above claims, wherein the ionic conductor powder material comprises an oxide material.

10. The solid oxide fuel cell of any one of the above claims, wherein the cathode functional layer has a thickness of not greater than 1 mm, and at least 0.5 microns.

11. The solid oxide fuel cell of any one of the above claims, wherein the ionic conductor powder material comprises yttria stabilized zirconia (YSZ).

12. The solid oxide fuel cell of any one of the above claims, wherein the electronic conductor powder material comprises lanthanum strontium manganite (LSM).

13. A method of forming a solid oxide fuel cell of claim 1, whereby the cathode functional layer is formed by the method comprising:
providing an ionic conductor powder material having a median particle diameter (d₅₀₍ᵢ₎) and an electronic conductor powder material having a median particle diameter (d₅₀₍ₑ₎);
forming a cathode functional layer from the ionic conductor powder material and the electronic conductor powder material,
wherein the median particle diameter (d₅₀₍ᵢ₎) of the ionic conductor powder material is no less than 1.5 microns and no greater than 10 microns.

14. The method of claim 13, wherein the layer is formed by sintering or hot-pressing with additional layers.

15. The method of claim 13, wherein the median particle diameter (d₅₀₍ₑ₎) of the electronic conductor powder material is no less than 0.1 microns and no greater than 5 microns

## Patentansprüche

1. Festoxidbrennstoffzelle, umfassend:
eine Elektrolytschicht;
eine die Elektrolytschicht überlagernde Kathodenfunktionsschicht, wobei die Kathodenfunktionsschicht aus einem ionischen Leiterpulvermaterial, das einen mittleren Partikeldurchmesser (d₅₀₍ᵢ₎) aufweist, und einem elektronischen Leiterpulvermaterial, das einen mittleren Partikeldurchmesser (d₅₀₍ₑ₎) aufweist, gebildet ist; und
eine die Kathodenfunktionsschicht überlagernde Kathodenmasseschicht,
wobei der mittlere Partikeldurchmesser (d₅₀₍ᵢ₎) des ionischen Leiterpulvermaterials nicht kleiner als 1,5 Mikrometer und nicht größer als 10 Mikrometer ist.

2. Festoxidbrennstoffzelle nach Anspruch 1, wobei ein Verhältnis des mittleren Partikeldurchmessers des ionischen Leiterpulvermaterials zu dem mittleren Partikeldurchmesser des elektronischen Leiterpulvermaterials (d₅₀₍ᵢ₎:d₅₀₍ₑ₎) größer als 0,7:1 und nicht größer als 10:1 ist.

3. Festoxidbrennstoffzelle nach einem der vorherigen Ansprüche, wobei ein Verhältnis eines Volumens des ionischen Leiterpulvermaterials zu einem Volumen des elektronischen Leiterpulvermaterials größer als 1,1:1 ist.

4. Festoxidbrennstoffzelle nach einem der vorherigen Ansprüche, wobei das ionische Leiterpulvermaterial in der Kathodenfunktionsschicht in einer Menge von nicht weniger als 40 Vol.-% vorhanden ist.

5. Festoxidbrennstoffzelle nach einem der vorherigen Ansprüche, wobei das Verhältnis des mittleren Partikeldurchmessers des ionischen Leiterpulvermaterials zu einem durchschnittlichen Partikeldurchmesser des elektronischen Leiterpulvermaterials (d₅₀₍ᵢ₎:d₅₀₍ₑ₎) größer als 0,7:1 und nicht größer als 5:1 ist.

6. Festoxidbrennstoffzelle nach einem der vorherigen Ansprüche, wobei mindestens einer aus mittlerem Partikeldurchmesser (d₅₀₍ᵢ₎) oder mittlerem Partikeldurchmesser (d₅₀₍ₑ₎) nicht kleiner als 2,5 Mikrometer ist.

7. Festoxidbrennstoffzelle nach einem der vorherigen Ansprüche, wobei der mittlere Partikeldurchmesser (d₅₀₍ₑ₎) des elektronischen Leiterpulvermaterials nicht kleiner als 0,1 Mikrometer und nicht größer als 5 Mikrometer ist.

8. Festoxidbrennstoffzelle nach einem der vorherigen Ansprüche, wobei der mittlere Partikeldurchmesser sowohl des ionischen Leiterpulvermaterials (d₅₀₍ᵢ₎) als auch des elektronischen Leiterpulvermaterials (d₅₀₍ₑ₎) nicht größer als 3,5 Mikrometer ist.

9. Festoxidbrennstoffzelle nach einem der vorherigen Ansprüche, wobei das ionische Leiterpulvermaterial ein Oxidmaterial umfasst.

10. Festoxidbrennstoffzelle nach einem der vorherigen Ansprüche, wobei die Kathodenfunktionsschicht eine Dicke von nicht mehr als 1 mm und mindestens 0,5 Mikrometer aufweist.

11. Festoxidbrennstoffzelle nach einem der vorherigen Ansprüche, wobei das ionische Leiterpulvermaterial Yttrium-stabilisiertes Zirkonoxid (YSZ) umfasst.

12. Festoxidbrennstoffzelle nach einem der vorherigen Ansprüche, wobei das elektronische Leiterpulvermaterial Lanthan-Strontium-Manganit (LSM) umfasst.

13. Verfahren zum Bilden einer Festoxidbrennstoffzelle nach Anspruch 1, wobei die Kathodenfunktionsschicht nach dem Verfahren gebildet wird, das Folgendes umfasst:
Bereitstellen eines ionischen Leiterpulvermaterials, das einen mittleren Partikeldurchmesser (d₅₀₍ᵢ₎) aufweist, und eines elektronischen Leiterpulvermaterials, das einen mittleren Partikeldurchmesser (d₅₀₍ₑ₎) aufweist;
Bilden einer Kathodenfunktionsschicht aus dem ionischen Leiterpulvermaterial und dem elektronischen Leiterpulvermaterial,
wobei der mittlere Partikeldurchmesser (d₅₀₍ᵢ₎) des ionischen Leiterpulvermaterials nicht kleiner als 1,5 Mikrometer und nicht größer als 10 Mikrometer ist.

14. Verfahren nach Anspruch 13, wobei die Schicht durch Versintern oder Heißpressen mit zusätzlichen Schichten gebildet wird.

15. Verfahren nach Anspruch 13, wobei der mittlere Partikeldurchmesser (d₅₀₍ₑ₎) des elektronischen Leiterpulvermaterials nicht kleiner als 0,1 Mikrometer und nicht größer als 5 Mikrometer ist.

## Revendications

1. Pile à combustible à oxyde solide, comprenant :
une couche d'électrolyte ;
une couche fonctionnelle cathodique recouvrant la couche d'électrolyte, la couche fonctionnelle cathodique étant formée d'un matériau pulvérulent conducteur ionique ayant un diamètre médian de particule (d₅₀₍ᵢ₎) et d'un matériau pulvérulent conducteur électronique ayant un diamètre médian de particule (d₅₀₍ₑ₎) ; et
une couche brute de cathode recouvrant la couche fonctionnelle cathodique,
le diamètre médian de particule (d₅₀₍ᵢ₎) du matériau pulvérulent conducteur ionique étant supérieur ou égal à 1,5 µm et inférieur ou égal à 10 µm.

2. Pile à combustible à oxyde solide selon la revendication 1, dans laquelle un rapport du diamètre médian de particule du matériau pulvérulent conducteur ionique au diamètre médian de particule du matériau pulvérulent conducteur électronique (d₅₀₍ᵢ₎/d₅₀₍ₑ₎) est supérieur à 0,7/1 et inférieur ou égal à 10/1.

3. Pile à combustible à oxyde solide selon l'une quelconque des revendications précédentes, dans laquelle un rapport d'un volume du matériau pulvérulent conducteur ionique à un volume du matériau pulvérulent conducteur électronique est supérieur à 1,1/1.

4. Pile à combustible à oxyde solide selon l'une quelconque des revendications précédentes, dans laquelle le matériau pulvérulent conducteur ionique est présent dans la couche fonctionnelle cathodique à raison d'au moins 40 % en volume.

5. Pile à combustible à oxyde solide selon l'une quelconque des revendications précédentes, dans laquelle le rapport du diamètre médian de particule du matériau pulvérulent conducteur au diamètre médian de particule du matériau pulvérulent conducteur électronique ayant un diamètre médian de particule (d₅₀₍ᵢ₎/d₅₀₍ₑ₎) est supérieur à 0,7/1 et inférieur ou égal à 5/1.

6. Pile à combustible à oxyde solide selon l'une quelconque des revendications précédentes, dans laquelle au moins soit le diamètre médian de particule (d₅₀₍ᵢ₎) soit le diamètre médian de particule (d₅₀₍ₑ₎) est supérieur ou égal à 2,5 µm.

7. Pile à combustible à oxyde solide selon l'une quelconque des revendications précédentes, dans laquelle le diamètre médian de particule (d₅₀₍ₑ₎) du matériau pulvérulent conducteur électronique est supérieur ou égal à 0,1 µm et inférieur ou égal à 5 µm.

8. Pile à combustible à oxyde solide selon l'une quelconque des revendications précédentes, dans laquelle le diamètre médian de particule du matériau pulvérulent conducteur ionique (d₅₀₍ᵢ₎) et du matériau pulvérulent conducteur électronique (d₅₀₍ₑ₎) est inférieur ou égal à 3,5 µm.

9. Pile à combustible à oxyde solide selon l'une quelconque des revendications précédentes, dans laquelle le matériau pulvérulent conducteur ionique contient un matériau à base d'oxyde.

10. Pile à combustible à oxyde solide selon l'une quelconque des revendications précédentes, dans laquelle la couche fonctionnelle cathodique a une épaisseur inférieure ou égale à 1 mm, et supérieure ou égale à 0,5 µm.

11. Pile à combustible à oxyde solide selon l'une quelconque des revendications précédentes, dans laquelle le matériau pulvérulent conducteur ionique contient de la zircone stabilisée par de l'oxyde d'yttrium (YSZ).

12. Pile à combustible à oxyde solide selon l'une quelconque des revendications précédentes, dans laquelle le matériau pulvérulent conducteur électronique contient de la manganite de lanthane et de strontium (LSM).

13. Procédé de formation d'une pile à combustible à oxyde solide selon la revendication 1, par lequel la couche fonctionnelle cathodique est formée selon le procédé comprenant :
l'utilisation d'un matériau pulvérulent conducteur ionique ayant un diamètre médian de particule (d₅₀₍ᵢ₎) et un matériau pulvérulent conducteur électronique ayant un diamètre médian de particule (d₅₀₍ₑ₎) ;
la formation d'une couche fonctionnelle cathodique à partir du matériau pulvérulent conducteur ionique et du matériau pulvérulent conducteur électronique,
dans lequel le diamètre médian de particule (d₅₀₍ᵢ₎) du matériau pulvérulent conducteur ionique est supérieur ou égal à 1,5 µm et inférieur ou égale à 10 µm.

14. Procédé selon la revendication 13, dans lequel la couche est formée par frittage ou par pressage à chaud avec des couches supplémentaires.

15. Procédé selon la revendication 13, dans lequel le diamètre médian de particule (d₅₀₍ₑ₎) du matériau pulvérulent conducteur électronique est supérieur ou égal à 0,1 µm et inférieur ou égal à 5 µm.
